(19) Europäisches Patentamt

European Patent Office

Office européen des brevets

(11) EP 0 579 224 B1

(12) **EUROPEAN PATENT SPECIFICATION**

(45) Date of publication and mention
of the grant of the patent:
**04.11.1998 Bulletin 1998/45**

(51) Int Cl.6: **H04N 1/46**

(21) Application number: **93111369.0**

(22) Date of filing: **15.07.1993**

(54) **Color information processing apparatus capable of performing gamut compression and color adaption**

Farbinformationsverarbeitungsgerät für Tonbereichkompression und Farbanpassung

Dispositif de traitement d'informations de couleur pour la compression de la gamme et adaptation de la couleur

(84) Designated Contracting States:
**DE GB**

(30) Priority: **15.07.1992 JP 210781/92**

(43) Date of publication of application:
**19.01.1994 Bulletin 1994/03**

(73) Proprietor: **FUJI XEROX CO., LTD.**
**Minato-ku Tokyo 107 (JP)**

(72) Inventors:
• **Yamasaki, Toru**
**Ebina-shi, Kanagawa (JP)**
• **Tsuzuki, Toshiyuki**
**Ebina-shi, Kanagawa (JP)**

• **Maeda, Masahiro**
**Ebina-shi, Kanagawa (JP)**
• **Seki, Noriaki**
**Ebina-shi, Kanagawa (JP)**
• **Kurahashi, Masayuki**
**Ebina-shi, Kanagawa (JP)**

(74) Representative: **Boeters, Hans Dietrich, Dr. et al**
**Patentanwälte Boeters & Bauer,**
**Bereiteranger 15**
**81541 München (DE)**

(56) References cited:
**EP-A- 0 448 250**     **EP-A- 0 488 655**
**DE-A- 4 123 869**     **US-A- 5 146 328**

EP 0 579 224 B1

**Description**

Field of the Invention

The present invention relates to an apparatus for processing color information.

Discussion of the Related Art

In Japanese Patent Application Unexamined Publication No. Hei. 4-78269 (filed by Fuji Xerox Co., Ltd.), corresponding to DE-A-41 23 869, a mechanism of color information exchange on a network is assumed, which is employed in the Color Addendum of the ODA (Office Document Architecture, the international standard ISO 8613).

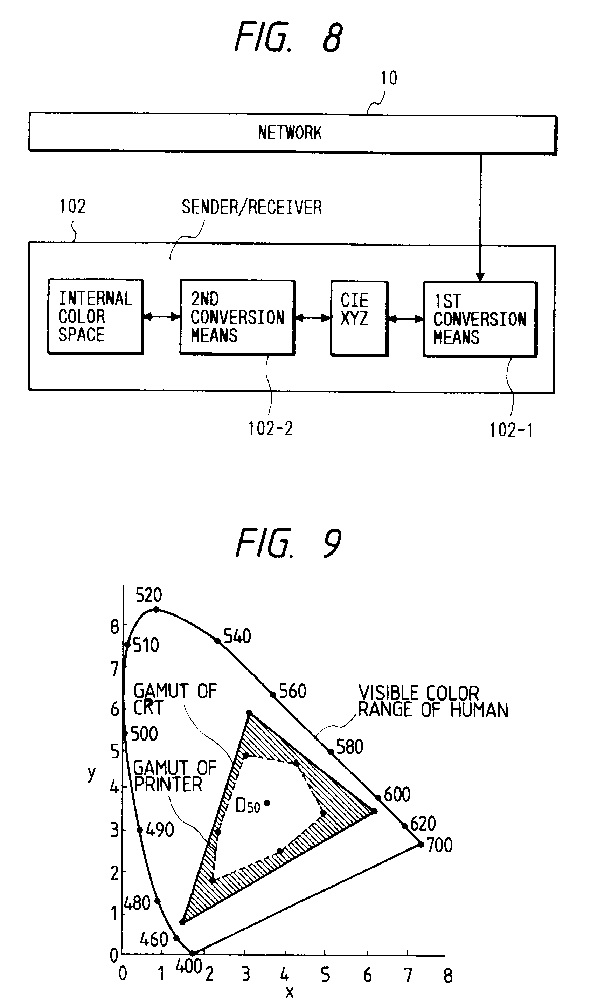

This mechanism is described below with reference to Fig. 8. According to the ODA, color space values transmitted through a network 10 for color information exchange should be accompanied by an equation describing a relationship with CIEXYZ values (calibration data) and reference white data. When receiving color information from the network 10, first a sender/receiver 102 calculates CIEXYZ values from the color space values transmitted through the network 10 by a first conversion means 102-1 using the calibration data, and then converts the CIEXYZ values to internal color space values by a second conversion means 102-2. The above two conversions may be effected by one calculation. Reverse operations are performed when the color information sender/receiver 102 sends color information to the network 10.

However, the network according to the ODA has the following problems.

First, it does not take the chromatic adaptation phenomenon into account. The present inventors have first succeeded in considering the color adaptation in information equipment by interpreting in the following manner the concept of color adaptation, which is known in chromatics.

The color adaptation in chromatics is the following phenomenon. For example, humans perceive the color of a certain object approximately as the same one both under daylight (standard source C) and under the illumination by a tungsten lamp (standard source A). That is, everything looks yellowish at the instant when the illumination light is changed from daylight to tungsten light, but the normal color perception is soon recovered. In sending color information to a network, this color adaptation phenomenon prevents correct determination of color signals and, therefore, precise color reproduction is not expected.

In the following, the well-known von Kries theory on the color adaptation and the Nakatani theory (CIE prediction equations) as its improvement are described. Details are described in "Characteristics of colors and related technologies" (in Japanese) published by Asakura Shoten.

Von Kries theory

The human visual system is considered to have three sensors respectively respond to red, green and blue light. The von Kries theory assumes that in a process of color adaptation, the shapes of the three spectral responses remain the same and their balance varies such that the responses vary in inverse proportion to the respective tristimulus values under illumination light.

With this assumption, equation (1) holds between tristimulus values X, Y and Z of a color (test color) under certain illumination light (test light) and tristimulus values X', Y' and Z' of a color (corresponding color) under another illumination light (reference light):

$$\begin{pmatrix} X' \\ Y' \\ Z' \end{pmatrix} = K \begin{pmatrix} X \\ Y \\ Z \end{pmatrix} = M^{-1}DM \begin{pmatrix} X \\ Y \\ Z \end{pmatrix} \quad \ldots \ldots (1)$$

where M and D are 3×3 matrices. The coefficients of the matrix M are determined by the physiological three primary colors of visual sense. The coefficients of the matrix D are determined by equation (2):

$$D = \begin{pmatrix} R_0'/R_0 & 0 & 0 \\ 0 & G_0'/G_0 & 0 \\ 0 & 0 & B_0'/B_0 \end{pmatrix} \quad \ldots \ldots \quad (2)$$

where $R_0$, $G_0$ and $B_0$ and $R_0'$, $G_0'$ and $B_0'$ are tristimulus values under the test light and the reference light, respectively on a color system having the physiological three primary colors of visual sense as the reference stimuli.

CIE prediction equations

This theory, which is based on the investigation results of Naya et al., can precisely explain the following color adaptation phenomena (the von Kries theory cannot explain those):

1) Chroma variation with respect to an illuminance change of illumination light (Hunt effect)
2) Emphasis of a lightness variation of an achromatic color with respect to an illuminance change of illumination light (Stevens effect)
3) Color perception of an achromatic color under the illumination by high-purity color light (Helson-Judd effect)

A specific calculation procedure consists of the following three steps.

1) Converting tristimulus values X, Y and Z of a test color to tristimulus values R, G and B based on the physiological three primary colors by equation (3):

$$\begin{pmatrix} R \\ G \\ B \end{pmatrix} = N \begin{pmatrix} X \\ Y \\ Z \end{pmatrix} \quad \ldots \ldots \quad (3)$$

where N is a 3×3 matrix and its coefficients are determined from the physiological three primary colors of visual sense.

2) Calculating tristimulus values R', G' and B' of a corresponding color from the tristimulus values R, G and B of the test color by a nonlinear conversion of equations (4):

$$R' = (100\rho_0'\xi' + 1)[(R + 1)/(100\rho_0\xi + 1)]^{Pr} - 1$$

$$G' = (100\rho_0'\eta' + 1)[(G + 1)/(100\rho_0\eta + 1)]^{Pg} - 1$$

$$B' = (100\rho_0'\zeta' + 1)[(B + 1)/(100\rho_0\zeta + 1)]^{Pb} - 1 \qquad (4)$$

3) Calculating tristimulus values X', Y' and Z' of a corresponding color from the tristimulus values R', G' and B' by equation (5):

$$\begin{pmatrix} X' \\ Y' \\ Z' \end{pmatrix} = N^{-1} \begin{pmatrix} R' \\ G' \\ B' \end{pmatrix} \quad \ldots \ldots \quad (5)$$

In equation (4), $\rho_0$ and $\rho_0'$ are luminous reflectances of grey as backgrounds of the test color and the reference color, respectively and a relationship $0.2 \leq \rho_0 = \rho_0' \leq 1.0$ holds. Parameters $\xi$, $\eta$ and $\zeta$ are obtained by equations (6):

$$\xi = (0.48105x + 0.78841y - 0.08081)/y$$

$$\eta = (-0.27200x + 1.11962y + 0.04570)/y \quad \ldots \ldots (6)$$

$$\zeta = 0.91822(1 - x - y)/y$$

where x and y are chromaticity coordinates of the test light. Parameters $\xi'$, $\eta'$ and $\zeta'$ are obtained from x' and y' by equations having the same forms as equations (6). Powers Pr, Pg and Pb for defining the nonlinear variation are obtained by equations (7):

$$Pr = [\frac{6.469 + 6.362 R_0^{0.4495}}{6.496 + 1.000 R_0^{0.4495}}]/[\frac{6.469 + 6.362(R_0')^{0.4495}}{6.496 + 1.000(R_0')^{0.4495}}]$$

$$Pg = [\frac{6.469 + 6.362 G_0^{0.4495}}{6.496 + 1.000 G_0^{0.4495}}]/[\frac{6.469 + 6.362(G_0')^{0.4495}}{6.496 + 1.000(G_0')^{0.4495}}]$$

$$Pb = [\frac{6.469 + 6.362 B_0^{0.5128}}{6.496 + 1.000 B_0^{0.5128}}]/[\frac{6.469 + 6.362(B_0')^{0.5128}}{6.496 + 1.000(B_0')^{0.5128}}] \tag{7}$$

In equations (7), equations (8) hold:

$$\begin{pmatrix} R_0 \\ G_0 \\ B_0 \end{pmatrix} = \rho_0 E/\pi \begin{pmatrix} \xi \\ \eta \\ \zeta \end{pmatrix}, \quad \begin{pmatrix} R_0' \\ G_0' \\ B_0' \end{pmatrix} = \rho_0' E'/\pi \begin{pmatrix} \xi' \\ \eta' \\ \zeta' \end{pmatrix} \quad \ldots \ldots (8)$$

where E and E' are illuminances in lux in a test field and a reference field, respectively.

Further, the following points should also be considered with regard to the color adaptation phenomenon.

According to the von Kries theory, as is understood from equation (1), the tristimulus values X', Y' and Z' of the corresponding color are calculated from the tristimulus values X, Y and Z of the test color by the 3×3-matrix operation in which the coefficients of the matrix are calculated from the physiological three primary colors of visual sense and the tristimulus values of the test light and the reference light on the color system that is based on the physiological three primary colors of visual sense.

On the other hand, by closely examining the CIE prediction equations, one can find that the corresponding color is determined by a combination of the 3×3-matrix operation with respect to the tristimulus values X, Y and Z of the test color, the one-dimensional LUT operation, and the other 3×3-matrix operation. That is, the tristimulus values R, G and B of the test color are calculated from X, Y and Z by the 3×3-matrix operation of equation (3) (the coefficients of the matrix are obtained from the physiological three primary color of visual sense), the tristimulus values R', G' and B' of the corresponding color are calculated from R, G and B by one-dimensional LUTs of equations (4) (the entries of the LUTs are obtained from the luminous reflectances in the test field and the reference field and the physiological three primary colors of visual sense), and the three tristimulus values X', Y' and Z' of the corresponding color are calculated from X, Y and Z by the 3×3-matrix operation of equation (5) (the coefficients of the matrix are obtained from the physiological three primary colors of visual sense).

In the case based on the von Kries theory, if a receiver acquires the reference white data (test light) as environmental information of a sender, it can calculate the corresponding color using the reference white data from the sender as well as the own reference white data (reference light). The reference white data from the sender is available because the ODA requires sending of the reference white data.

However, in the case based on the CIE prediction equations, the reference white illuminance of the sender as the illuminance in the test field is also needed to calculate the corresponding color. The receiver calculates the corresponding color using this illuminance as well as the own reference white illuminance as the illuminance in the reference field.

Information on the sender side may be used for the luminous reflectance in the test field (which is equal to the luminous reflectance in the reference field). Alternatively, the receiver may assume a proper value for it.

Besides the above methods that determine the corresponding color, there is another, simple method of taking into account the color adaptation in chromatics, in which the CIELAB color space is used. According to the paper by Koichi Ikeda, Masaharu Nakayama and Kiyoshige Obara ("Comparison of perceived color-differences of color chip with their colorimetric ones in the CIE 1976 L*u*v* and the CIE 1976 L*a*b* uniform color spaces," CIE Proceedings 19th Session P-79-10, 1979), when CIELAB values of chips having the same color are calculated while illumination colors (i.e., reference whites) are changed, the calculated CIELAB values have a small color difference and well reflect the color adaptation phenomenon. Therefore, when being applied to the network system, this method can provide the same effects as in the case of determining the corresponding color by first converting CIEXYZ to CIELAB by using reference white data of a sender and then converting the latter to CIEXYZ by using reference white data of a receiver. As described in the publication Hei. 4-78269 (mentioned above), the above conversion from CIEXYZ to CIELAB can be performed by a one-dimensional LUT operation and a 3×3-matrix operation:

$$L^* = 116(Y/Y_0)^{1/3} - 16 = 116f(Y/Y_0)$$

$$a^* = 500(X/X_0)^{1/3} - 500(Y/Y_0)^{1/3}$$

$$= 500f(X/X_0) - 500f(Y/Y_0) \tag{9}$$

$$b^* = 200(Y/Y_0)^{1/3} - 200(Z/Z_0)^{1/3}$$

$$= 200f(Y/Y_0) - 200f(Z/Z_0)$$

where

$$f(t) = \begin{cases} t^{1/3} - 16/116 & for\ 0.008856 < t \le 1 \\ 7.787t & for\ 0 \le t \le 0.008856 \end{cases} \quad \cdots \cdots (10)$$

In equations (9), $X_0$, $Y_0$ and $Z_0$ are chromaticity coordinates of the reference white. Therefore, equation (11) is established:

$$\begin{pmatrix} L^* \\ a^* \\ b^* \end{pmatrix} = \begin{pmatrix} 0 & 116 & 0 \\ 500 & -500 & 0 \\ 0 & 200 & -200 \end{pmatrix} \begin{pmatrix} f_1(X/X_0) \\ f_2(Y/Y_0) \\ f_3(Z/Z_0) \end{pmatrix} \quad \cdots \cdots (11)$$

That is, the entire calculation for the color adaptation is a combination of the one-dimensional LUT operation (reference white data of a sender is used) and the 3×3-matrix operation for converting CIEXYZ to CIELAB and the 3×3-matrix operation and the one-dimensional LUT operation (reference white data of a receiver is used) for converting CIELAB to CIEXYZ.

It should be noted that the two intermediate 3×3-matrix operations, which are inverse to each other, are combined to become a unit matrix and, as a result, the two one-dimensional LUT operations are also combined to become a single one-dimensional LUT operation. That is, only one set of LUTs for introducing equations (12) is needed:

$$X' = XX_{0R}/X_{0S}$$

$$Y' = YY_{0R}/Y_{0S} \quad \cdots \cdots (12)$$

$$Z' = ZZ_{0R}/Z_{0S}$$

where $X_{0S}$, $Y_{0S}$ and $Z_{0S}$ are reference white data of the sender and $X_{0R}$, $X_{0R}$ and $Z_{0R}$ are reference white data of the receiver.

In the method under discussion, it is further noted that no operations for the color adaptation are needed if the CIELAB color space is employed in the sender side. That is, even if the receiver deals with CIELAB values from the sender that are accompanied by the sender's reference white data as if the CIELAB values were accompanied by the own reference white data, a resultant color difference is small.

The second problem of the network system according to the ODA is that the gamut compression is not taken into account. The gamut compression is the technique as described below.

A case of sending information of a color displayed on a CRT to a printer is used here as an example. Since the reproducible range (i.e., gamut) of the CRT is wider than that of the printer as shown in Fig. 9, there exist colors (hatched in Fig. 9) that can be expressed by the CRT but not by the printer. The gamut compression is a method of mapping those colors into the gamut of the printer.

The gamut information of the sender is missing in the color information exchange mechanism of the ODA, in which only the equation for correlation with CIEXYZ is exchanged. It is necessary to also exchange the gamut information.

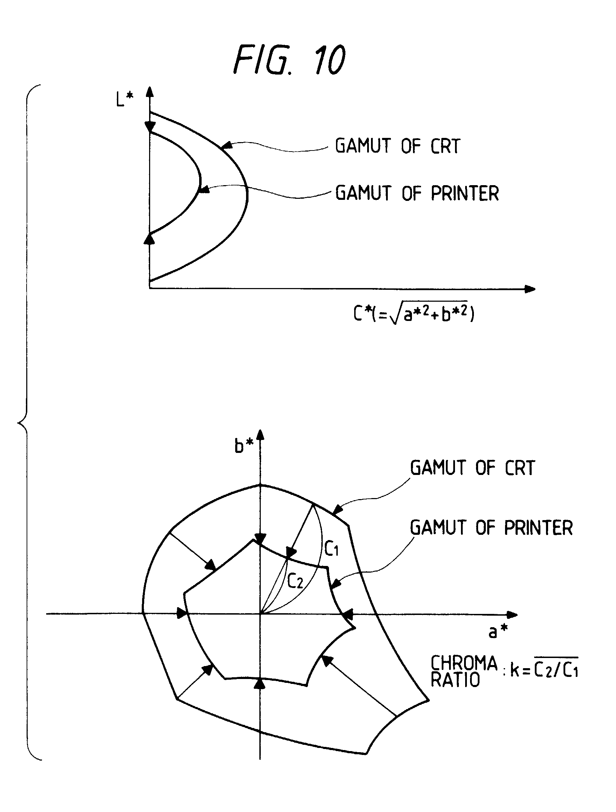

The ODA gives an example of gamut compression in which on the CIELUV/CIELAB color space the chroma is compressed and the lightness is changed without changing the hue. To perform the gamut compression precisely, a conversion by three-dimensional LUTs is needed because the maximum chroma depends on the hue and lightness. However, the simplified method discovered by persons including two of the present inventors is employed here. (Tsuzuki, Yamasaki and Ikegami, "Color reproduction using linear compression on a uniform color space," Proceedings of the fifth color engineering conference, 3-3, pp. 55-58, 1988) In this method, as shown in Fig. 10, the gamut compression is performed such that $L^*$ is linearly compressed so that maximums and minimums of $L^*$ coincide with each other, and that $C^* (= (a^{*2} + b^{*2})^{1/2})$ is linearly compressed in a ratio between averages of maximums of $C^*$ for respective values of the hue $H^* (= \tan^{-1}(a^*/b^*))$. Actually, in some cases, only the $L^*$ compression is sufficient. It is possible to perform nonlinear compression rather than the linear compression.

According to the above method, the gamut compression can be performed on the CIELAB color space using one-dimensional LUTs. As the gamut information of the sender, the maximum and minimum of $L^*$ and the average of maximums of $C^*$ for respective $H^*$ values are exchanged.

The conversion from CIEXYZ to CIELAB can be performed by a one-dimensional LUT operation and a 3×3-matrix operation. Therefore, it is noted that when starting from CIEXYZ, it is necessary to perform a one-dimensional LUT operation, a 3×3-matrix operation and another one-dimensional LUT operation are required to obtain the same effects as above.

EP-A-04 48 250 discloses a method and apparatus for processing data representing an image in a first color space suitable for controlling a first image output device. The apparatus comprises a processor for reversibly transforming the image into a perceptual color space defined by lightness, colorfulness and hue components, and for modifying the components of the image in accordance with a predetermined algorithm so that all colors in the image fall within the gamut of a second image device. Further it is stated that the image represented in RGB coordinates is converted into equivalent tristimulus values XYZ. The XYZ values are then converted via a color appearance model CAM into perceptual LHC coordinates. The CAM takes into account the surround and viewing conditions as well as the color stimulus values of each colored area in the image. Factors that are known to affect the appearance are the luminance level, spectral power distribution, etc. In the next stage the LHC image is modified so as to take account of the differences between the color gamut of e.g. the monitor and the gamut of e.g. the printer. In other words, a gamut conversion is performed in the LHC space. Therefore the following chain of conversions is performed:

$$RGB \dashrightarrow XYZ \dashrightarrow LCH \dashrightarrow gamut(LCH)',$$

wherein step 2 includes applying the CAM model and step 3 performs the gamut compression. Further it is implicitly clear from the corresponding description that step 2 needs the appropriate information, i.e. environmental information, and that the same holds for step 3, i.e. gamut compression/expansion information. Further the document discloses that the monitor, which is the sender of the color signals, is characterized in terms of its color gamut and transfer functions. Those parameters are stored in a respective memory and used for the gamut compression/expansion afterwards. Therefore such a device is not flexible and it is difficult to change, for example, the monitor. In this case new monitor data must be generated and stored in the respective memory, which means a complete new setup of the device.

DE-A-41 23 869 describes a network system for the conversion of color signals in the various color spaces like RGB, CMY, CIEXYZ, NTSCYIQ, CIELAB, and CIELUV. For the color conversion the reference white is needed and must be either transmitted through the network or stored in memory.

EP-A-04 88 655 discloses a method of transforming a color image of a first media so as to be reproduced by a second media, the color reproducing capability of which is smaller than that of the first media. The chroma of color image data "T" is compared with a threshold value which is "a" times of the maximum chroma of the second color gamut of the second media at a particular lightness and hue of the color image data. The chroma is compressed in accordance with the comparison result without changing the hue. Further the maximum and minimum values of the lightness are considered.

But none of the devices according to the documents above show an inexpensive, easy adaptable color information exchange mechanism.

It is therefore an object of the present invention to provide an inexpensive, easy adaptable color information processing apparatus which can perform the gamut compression/expansion an can accommodate the color adaptation.

This object is solved by the features of claim 1. Preferred embodiments are subject of the dependent claims.

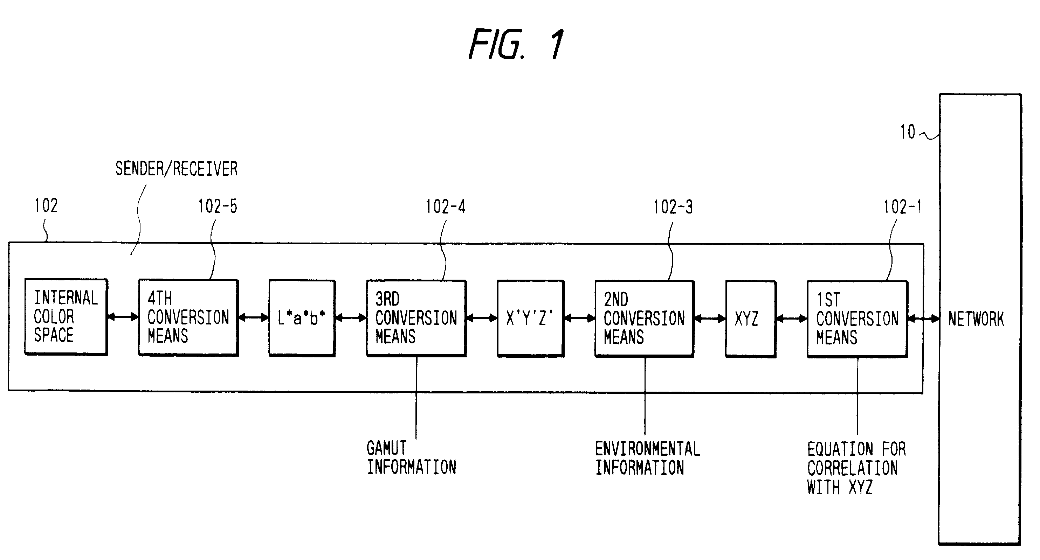

In a color information exchange mechanism of the embodiment of the invention shown in Fig. 1, color information is exchanged through a network 10 together with an equation correlating a transmission color space with CIEXYZ and environmental information (reference white data, reference white data and an illuminance, or reference white data, an illuminance and a luminous reflectance) and/or gamut information (the maximum and minimum of L*, or the maximum and minimum of L* and an average of maximums of C* (= $(a^{*2} + b^{*2})^{1/2}$) for respective values of the hue H* (= $\tan^{-1}$ (a*/b*)). A sender/receiver 102, which is equipment connected to the network 10, is constituted of a first conversion means 102-1 for converting the transmission color space values to CIEXYZ using the equation for correlation with CIEXYZ or performing a conversion reverse to it, a second conversion means 102-3 for performing conversion to a corresponding color using environmental information of the sender and receiver, a third conversion means 102-4 for performing gamut compression using the gamut information of the sender and receiver, and a fourth conversion means 102-5 for performing conversion to an internal color space of the equipment. The order of the above conversion means may be changed arbitrarily in accordance with circumstances of the equipment. Further, the mechanism may be simplified by combining some of the conversion means or omitting some of those in accordance with the equipment/network to which the invention is applied.

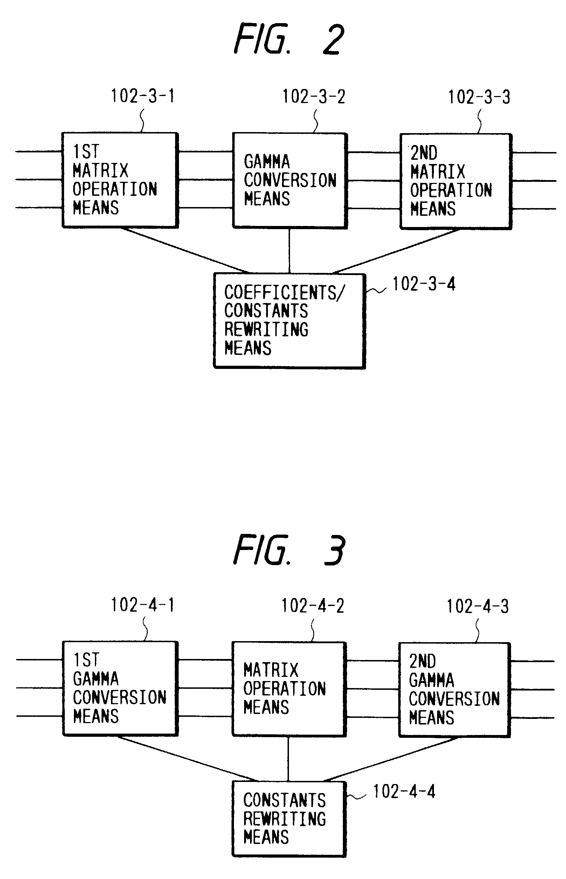

As shown in Fig. 2, the second conversion means 102-3 for performing the conversion to the corresponding color using the environmental information consists of a first matrix operation means 102-3-1, a gamma conversion means 102-3-2, a second matrix operation means 102-3-3, and a rewriting means 102-3-4 for rewriting coefficients/constants of the above means.

As shown in Fig. 3, the third conversion means 102-4 for performing the gamut compression/expansion using the gamut information consists of a first gamma conversion means 102-4-1, a matrix operation means 102-4-2, a second gamma conversion means 102-4-3, and a rewriting means 102-4-4 for rewriting constants of at least one of the first and second gamma conversion means.

The positions of the second conversion means 102-3 and the third conversion means 102-4 may be interchanged. Where operation means of the same type are provided adjacent to each other, they may be combined to a single operation means. Further, the mechanism can be simplified by omitting the conversion means in accordance with the equipment/network to which the invention is applied. The color information may be recorded on a recording medium instead of being sent to the network.

In the first conversion means 102-1, color signals sent from the network 10 are converted to values on the CIEXYZ color space using the equation (calibration data) correlating the color signals with the CIEXYZ values.

In the second conversion means 102-3, in the case where the corresponding color is calculated based on the von Kries theory, first the coefficients of the matrices in equation (1) are calculated using the reference white data as the environmental information of the sender, the own reference white data and the physiological three primary color data, and set as the coefficients of the first matrix operation means 102-3-1. Then, the entries of the LUTs and the coefficients of the second matrix operation means 102-3-3 are set at such values as cause no actual conversion.

Where the corresponding color is calculated based on the CIE prediction equations, the coefficients of the matrices and the entries of the LUTs in equations (3)-(5) are rewritten using not only the reference white data and the physiological three primary color data but also the reference white illuminance of the sender as the illuminance in the test field and the own reference white illuminance as the illuminance in the reference field. The luminous reflectance in the test field (that is equal to the luminous reflectance in the reference field) may be determined using the information from the sender. Alternatively, it may be set at a proper value by the receiver, or it may be an average of the luminous reflectances of the sender and receiver.

Further, where the operations for the color adaptation include the conversion to CIELAB, the entries of the one-dimensional LUTs in equation 12 are set using the reference white data as the environmental information of the sender and the own reference white data. The coefficients of the two matrix operation means 102-3-1 and 102-3-3 are set at such values as cause no actual conversion.

In the third conversion means 102-4, the entries of the first one-dimensional LUTs and the coefficients of the matrix operation means 102-4-2 are set to those used in equation (11). The entries of the second one-dimensional LUTs are set by calculating the respective compression/expansion ratios of L*, a* and b* based on the gamut information of the sender (the maximum and minimum of L*, and the average of maximums of C* (= $(a^{*2} + b^{*2})^{1/2}$) for respective values of the hue H* (= tan$^{-1}$(a*/b*)) and the own gamut information.

In the fourth conversion means 102-5, the conversion is performed from the color space resulting from the conversion by the third conversion means 102-4 to the CIEXYZ color space.

BRIEF DESCRIPTION OF THE DRAWINGS

Fig. 1 is a block diagram showing a color information exchange mechanism according to the present invention;
Fig. 2 is a block diagram outlining a second conversion means for performing operations for color adaptation according to the invention;
Fig. 3 is a block diagram outlining a third conversion means for performing gamut compression/expansion according to the invention;
Fig. 4 is a block diagram showing a color recording apparatus having a color conversion device according to a first embodiment of the invention;
Fig. 5 is a block diagram showing a color recording apparatus having a color conversion device according to a second embodiment of the invention;
Fig. 6 is a block diagram showing a color information output apparatus having a color conversion device according to a third embodiment of the invention;
Fig. 7 is a block diagram showing a color information editing apparatus having a color conversion device according to a fourth embodiment of the invention;
Fig. 8 is a block diagram showing a conventional color information exchange mechanism;
Fig. 9 is a graph illustrating a difference between gamuts of the CRT and printer; and
Fig. 10 includes graphs illustrating gamut compression.

DESCRIPTION OF THE PREFERRED EMBODIMENTS

Embodiments of the present invention are described hereinafter in detail with reference to the accompanying drawings.

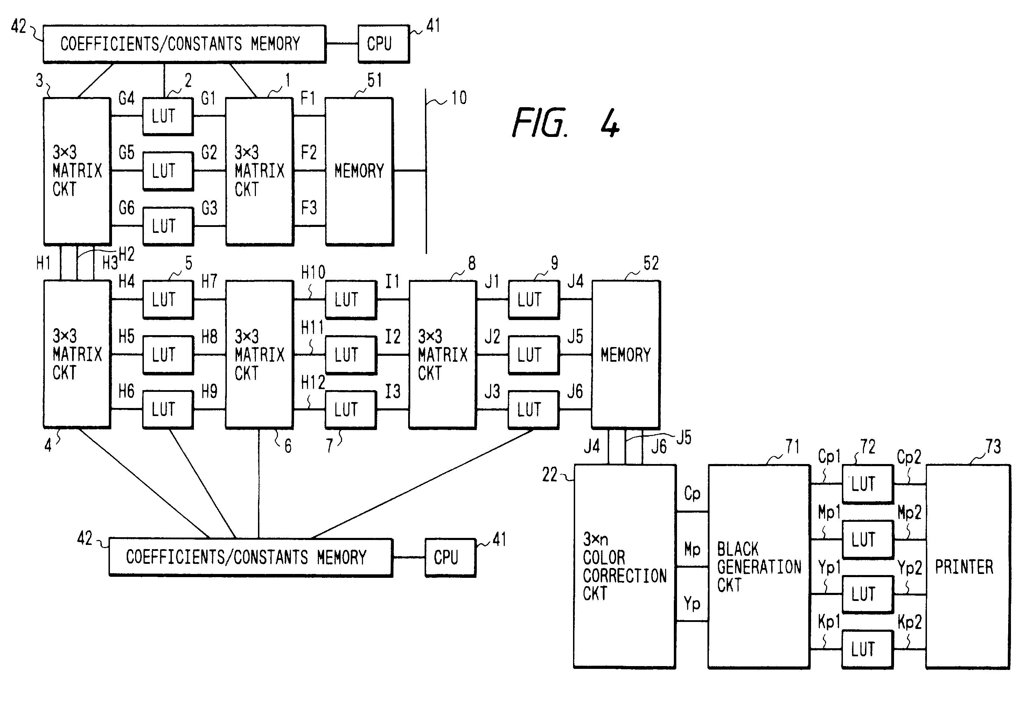

Fig. 4 is a block diagram showing a color recording apparatus having a color conversion device according to a first embodiment of the invention. The color recording apparatus is connected to a network 10. Reference numerals 51 and 52 represent data memories. A 3×3-matrix operation circuit 1 converts, by a matrix operation, input values F1, F2 and F3 on a certain color space to values G1, G2 and G3 on a first intermediate color space. Matrix coefficients of the operation circuit 1 are set in accordance with the type of color space (various color spaces may be used) used to represent the values F1, F2 and F3 by using coefficients sent, as those defining the equation for correlation with XYZ, from a sender (not shown) or an information management mechanism connected to the network 10, by reading out coefficients stored in a coefficients/constants memory 42, or by using results of an operation on the above two kinds of coefficients. The reading and writing of those coefficients and the operation are performed by a CPU 41.

Three one-dimensional LUTs 2 change the values G1, G2 and G3 on the first intermediate color space to values G4, G5 and G6 on a second intermediate color space, respectively. Entries of the one-dimensional LUTs 2 are set in accordance with the type of color space by using values sent, as those defining the equation for correlation with XYZ, from the sender (not shown) or the information management mechanism connected to the network 10, by reading out values stored in the coefficients/constants memory 42, or by using results of an operation on the above two kinds of values. The reading and writing of those values and the operation are performed by the CPU 41.

A 3×3-matrix operation circuit 3 converts the values G4, G5 and G6 on the second intermediate color space to values H1, H2 and H3 on a third intermediate color space by a matrix operation. Matrix coefficients of the operation circuit 3 are set in accordance with the type of color space by using coefficients sent, as those defining the equation for correlation with XYZ, from the sender (not shown) or the information management mechanism connected to the network 10, by reading out coefficients stored in the coefficients/constants memory 42, or by using results of an operation on the above two kinds of coefficients. The reading and writing of those coefficients and the operation are performed by the CPU 41.

The third intermediate color space used to represent the values H1, H2 and H3 is always XYZ.

A 3×3-matrix operation circuit 4 converts the values H1, H2 and H3 on the third intermediate color space (XYZ) to values H4, H5 and H6 by a matrix operation. Matrix coefficients of the operation circuit 4 are set by using those sent, as environmental information, from the sender (not shown) or the information management mechanism connected to the network 10, by reading out coefficients stored in the coefficients/constants memory 42, or by using results of an operation on the above two kinds of coefficients. The reading and writing of those coefficients and the operation are performed by the CPU 41. Although in this embodiment the matrix operation circuits 3 and 4 are separately constructed, they may be combined into a single matrix operation circuit.

Then, three one-dimensional LUTs 5 change the values H4, H5 and H6 to values H7, H8 and H9, respectively.

Entries of the one-dimensional LUTs 5 are set by using values sent, as the environmental information, from the sender (not shown) or the information management mechanism connected to the network 10, by reading out values stored in the coefficients/constants memory 42, or by using results of an operation on the above two kinds of values. The reading and writing of those values and the operation are performed by the CPU 41.

A 3×3-matrix operation circuit 6 converts the values H7, H8 and H9 (on XYZ) to values H10, H11 and H12 by a matrix operation. Matrix coefficients of the operation circuit 6 are set by using those sent, as the environmental information, from the sender (not shown) or the information management mechanism connected to the network 10, by reading out coefficients stored in the coefficients/constants memory 42, or by using results of an operation on the above two kinds of coefficients. The reading and writing of those coefficients and the operation are performed by the CPU 41.

Then, three one-dimensional LUTs 7 change the values H10, H11 and H12 on the third intermediate color space (XYZ) to values I1, I2 and I3 on a fourth intermediate color space, respectively. Curves of the three one-dimensional LUTs 7 are fixed to $f(X/X_0)$, $f(Y/Y_0)$ and $f(Z/Z_0)$ of equation (10). The own reference white data is employed as the values of $X_0$, $Y_0$ and $Z_0$. In this embodiment, setting is made such that $X_0 = 96.4$, $Y_0 = 100$ and $Z_0 = 82.4$ (standard source $D_{50}$).

Then, a 3×3-matrix operation circuit 8 converts the values I1, I2 and I3 on the fourth intermediate color space to values J1, J2 and J3 on a fifth intermediate color space by a matrix operation. Matrix coefficients of the matrix operation circuit 8 are fixed to those used in equation (11). Thus, the color space has been changed from CIEXYZ to CIELAB.

Then, three one-dimensional LUTs 9 change the values J1, J2 and J3 on the fifth intermediate color space (CIELAB) to values J4, J5 and J6, respectively. Entries of the three one-dimensional LUTs 9 are set by using values sent, as gamut information, from the sender (not shown) or the information management mechanism connected to the network 10, by reading out values stored in the coefficients/constants memory 42, or by using results of an operation on the above two kinds of values. The reading and writing of those values and the operation are performed by the CPU 41.

Since the color space to represent the values J4, J5 and J6 is always CIELAB, the number of bits can be reduced or there hardly occurs picture quality deterioration due to sub-sampling, thereby improving data compression performance. Therefore, the present embodiment has an advantage that the capacity of the memory 52 can be reduced.

A 3×n color correction matrix circuit 22 calculates ink quantities Cp, Mp and Yp for recording onto a recording sheet. Since the color space to represent the values J4, J5 and J6 is always CIELAB, matrix coefficients of the 3×n color correction matrix circuit 22 may be fixed. The number n is usually three. Where more accurate color reproduction is required, the circuit 22 may include higher terms. Then, a conventional black generation circuit 71 converts the ink quantities Cp, Mp and Yp to four color signals Cp1, Mp1, Yp1 and Kp1 (black ink quantity), which are converted by four one-dimensional LUTs 72 to signals Cp2, Mp2, Yp2 and Kp2 suitable for characteristics of a printer 73. The printer 73 performs recording onto a recording sheet using the signals Cp2, Mp2, Yp2 and Kp2.

The publication Hei. 4-78269 (mentioned above) describes in detail what specific coefficients/constants for the conversion to the values H1, H2 and H3 (XYZ) should be stored in the memory 42 in accordance with the type of color space (various color spaces may be used) used to represent the values F1, F2 and F3 that are input from the network 10. Therefore, a description therefor is emitted here.

In the following, descriptions are made of what specific coefficients/constants for the change from the values H1, H2 and H3 (XYZ) to the values H10, H11 and H12 should be stored in the memory 42 in accordance with the type of operation method (various operation methods may be employed) for calculating the corresponding color, and of what specific constants for the change (gamut compression/expansion) to the values J4, J5 and J6 after the conversion from the values H10, H11 and H12 to the values J1, J2 and J3 (CIELAB) should be stored in the memory 42.

First, basic examples are described below in detail as to the specific coefficients/constants for the various types of operation methods for calculating the corresponding color. It is apparent that other coefficients/constants may be used as long as they do not necessitate a change of the circuit constitution.

First, the case of calculating the corresponding color based on the von Kries theory is described.

The matrix coefficients of the matrix operation circuit 4, i.e., the coefficients of the matrix of equation (1) are calculated by using the reference white data as the environmental information of the sender, the own reference white data and the physiological three primary color data. Therefore, it is necessary to store the own reference white data and the physiological three primary color data. For example, the following coordinates of Pitt are stored as the physiological three primary color data (x, y):

$$x_r = 0.747, \; y_r = 0.253$$

$$x_g = 1.081, \; y_g = -0.081 \quad \ldots\ldots \; (13)$$

$$x_b = 0.180, \; y_b = 0.000$$

Since the details of the above calculation are described in "Characteristics of colors and related technologies" published by Asakura Shoten (mentioned above), it is not described here.

The entries of the LUTs 5 are set so as to represent 45°-inclination curves, and the unit matrix is set for the matrix operation circuit 6. Such entries and matrix coefficients are stored in the memory 42.

Second, in the case of calculating the corresponding color based on the CIE prediction equations, the matrix coefficients and the LUT entries of equations (3)-(5) are rewritten using not only the reference white data and the physiological three primary color data but also the reference white illuminance of the sender as the illuminance in the test field and the own reference white illuminance as the illuminance in the reference field. Therefore, it is necessary to store the own reference white data, the physiological three primary color data $(x, y)$ and the own reference white illuminance in lux.

Third, in the case of performing the operations for the color adaptation with the conversion to CIELAB, the unit matrix is set for each of the $3\times3$-matrix operation circuit 4 for converting the values H1, H2 and H3 (XYZ) to the values H4, H5 and H6 and the $3\times3$-matrix operation circuit 6 for converting the values H7, H8 and H9 to the values H10, H11 and H12. It is necessary to store such coefficients in the memory 42. The values calculated by equation (12) using the reference white data $X_{OS}$, $Y_{OS}$ and $Z_{OS}$ of the sender and the own reference white data $X_{OR}$, $Y_{OR}$ and $Z_{OR}$ are set as the entries of the three one-dimensional LUTs 5 for changing the values H4, H5 and H6 to the values H7, H8 and H9. Therefore, it is necessary to store $X_{OR}$, $Y_{OR}$ and $Z_{OR}$ in the memory 42.

In the gamut compression/expansion, it is necessary to store, in the memory 42 as the own gamut information, a maximum of $L^*$ (i.e., $L^*_{Rmax}$) and a minimum of $L^*$ (i.e., $L^*_{Rmin}$) and an average C2 of maximums of $C^*$ $(= (a^{*2} + b^{*2})^{1/2})$ for respective values of the hue $H^*$ $(= \tan^{-1}(a^*/b^*))$. A procedure of calculating, using the above values, the actual entries to be written to the three one-dimensional LUTs 9 is described below.

The following procedure is performed in the case where a maximum of $L^*$ (i.e., $L^*_{Smax}$) and a minimum of $L^*$ (i.e., $L^*_{Smin}$) and an average C1 of maximums of $C^*$ for respective values of the hue $H^*$ are sent, together with the color data, as the gamut information of the sender.

A straight line represented by equation (14) is calculated by using $L^*_{Rmax}$ and $L^*_{Rmin}$ read from the memory 42 and $L^*_{Smax}$ and $L^*_{Smin}$ sent from the sender, and written to the LUT 9 for changing J1 to J4:

$$L^*_{OUT} = (L^*_{Rmax} - L^*_{Rmin})L^*_{IN}/(L^*_{Smax} - L^*_{Smin})$$

$$+ (L^*_{Rmin}L^*_{Smax} - L^*_{Rmax}L^*_{Smin})/(L^*_{Smax} - L^*_{Smin}) \qquad (14)$$

The above procedure is for the case of linear compression/expansion. It is apparent that a nonlinear curve may be written to the LUT 9.

Straight lines represented by equations (15) are calculated by using C2 read from the memory 42 and C1 sent from the sender, and rewritten to the LUT 9 for changing J2 to J5 and the LUT 9 for changing J3 to J6, respectively:

$$a^*_{OUT} = C2 \cdot a^*_{IN}/C1$$

$$b^*_{OUT} = C2 \cdot b^*_{IN}/C1 \qquad (15)$$

The above procedure is for the case of linear compression/expansion. It is apparent that nonlinear curves may be written to the LUTs 9.

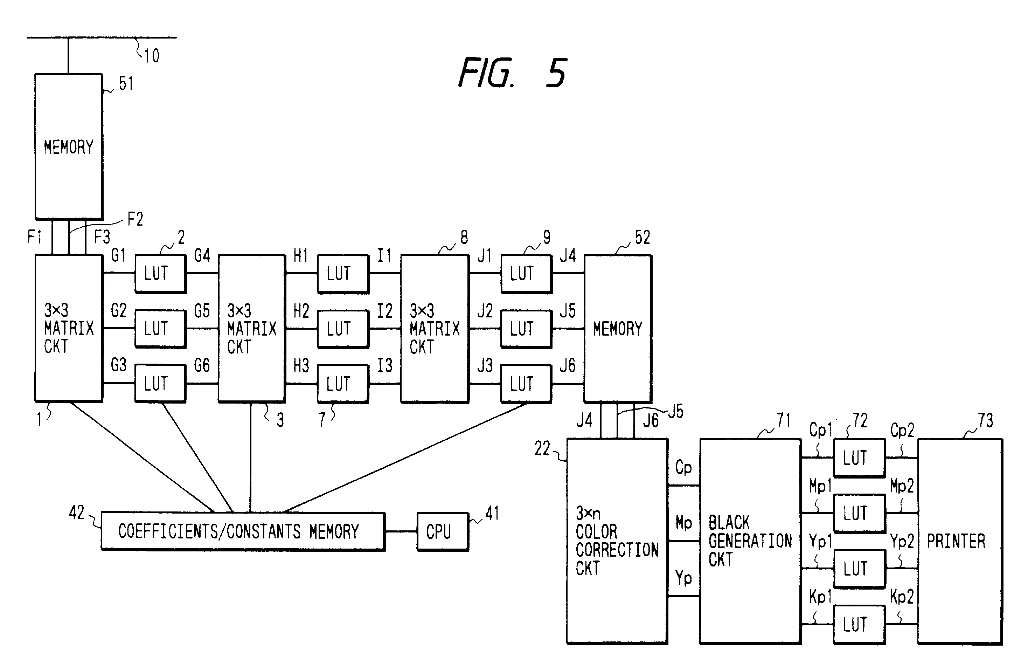

Fig. 5 is a block diagram showing a color recording apparatus having a color conversion device according to a second embodiment of the invention. This embodiment is characterized in that the method for calculating the corresponding color is limited to the case where the operations for the color adaptation are performed with the conversion to CIELAB. Therefore, a simplified apparatus is obtained by eliminating the $3\times3$-matrix operation circuit 4, three one-dimensional LUTs 5 and $3\times3$-matrix operation circuit 6 that are provided in the first embodiment to calculate the corresponding color. The remaining construction of the apparatus and the coefficients/constants therefor are the same as in the first embodiment. Among the environmental information from the sender, only the reference white data is utilized. That is, the other information such as the illuminance or luminous reflectance is disregarded even if it is received.

Further, if the color space used to represent the color information transmitted through the network 10 is limited to CIELAB, it is possible to also eliminate the $3\times3$-matrix operation circuit 1, three one-dimensional LUTs 2 and $3\times3$-matrix operation circuit 3 for the color space conversion and the three one-dimensional LUTs 7 and $3\times3$-matrix operation circuit 8 for the conversion from XYZ to CIELAB. In this case, a greatly simplified apparatus can be provided.

Although in the above two embodiments the 3×3-matrix operation circuit 1, three one-dimensional LUTs 2 and 3×3-matrix operation circuit 3 are used for the color space conversion, any circuits may be used for that purpose. Although in the above embodiments the ink quantities Cp, Mp and Yp for the recording onto a recording sheet are calculated by the 3×n color correction matrix circuit 22, three-dimensional LUTs or any other operation circuits may be used for that purpose. Further, other modifications are possible; for example, a 3-input-4-output LUT may be used to provide both functions of the 3×n color correction matrix circuit 22 and the black generation circuit 71.

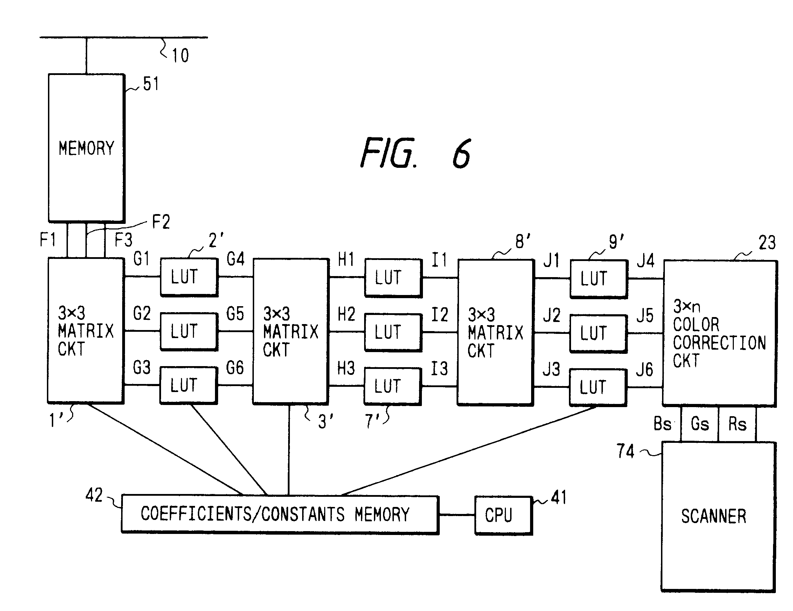

Fig. 6 is a block diagram showing a color information output apparatus having a color conversion device according to a third embodiment of the invention. Reference numeral 51 represents a data memory. This color information output apparatus has a feature that when a receiver of color information does not have an operation device for the color space conversion and/or an operation device for calculating the corresponding color and/or an operation device for the gamut compression, the color information output apparatus can output the color information after performing the operations of the missing devices on the receiver side.

A 3×n color correction matrix circuit 23 converts outputs Bs, Gs and Rs of a scanner 74 (color information generation means) to values J4, J5 and J6 on a first intermediate color space. The number n is three in this embodiment. Where more accurate color reproduction is required, the circuit 23 may include higher terms, or include three one-dimensional LUTs for changing curves of color signals, or include both of them. In this embodiment, since the first intermediate color space used to represent the signals J4, J5 and J6 are always CIELAB, it suffices to prepare, as the coefficients of the color conversion circuit 23, only the coefficients determined recursively so as to enable correct conversion to CIELAB values. The own reference white data is employed as the values of $X_0$, $Y_0$ and $Z_0$. In this embodiment, setting is made such that $X_0 = 96.4$, $Y_0 = 100$ and $Z_0 = 82.4$ (standard source $D_{50}$).

Then, three one-dimensional LUTs 9' change the values J4, J5 and J6 on the first intermediate color space (CIELAB) to values J1, J2 and J3, respectively. Entries of the three one-dimensional LUTs 9' are set by using values sent, as gamut information, from a receiver (not shown) or an information management mechanism for managing the gamut information of respective devices connected to the network 10, by reading out values stored in a coefficients/constants memory 42, or by using results of an operation on the above two kinds of values. The reading and writing of those values and the operation are performed by a CPU 41.

Then, a 3×3-matrix conversion circuit 8' converts, by a matrix operation, the values J1, J2 and J3 on the first intermediate color space to values I1, I2 and I3 on a second intermediate color space. Matrix coefficients of the matrix operation circuit 8' are set at those used in equation (16), which is an inverse matrix of the matrix used in equation (11):

$$\begin{pmatrix} f_1(X/X_0) \\ f_2(Y/Y_0) \\ f_3(Z/Z_0) \end{pmatrix} = \begin{pmatrix} 1/116 & 1/500 & 0 \\ 1/116 & 0 & 0 \\ 1/116 & 0 & -1/200 \end{pmatrix} \begin{pmatrix} L^{\cdot} \\ a^{\cdot} \\ b^{\cdot} \end{pmatrix} \quad \ldots \ldots (16)$$

Then, three one-dimensional LUTs 7' change the values I1, I2 and I3 on the second intermediate color space to values H1, H2 and H3 on a third intermediate color space (XYZ), respectively. Curves of the three one-dimensional LUTs 7' are fixed to those of equations (17), which are introduced from equation (10):

$$X = \begin{cases} (f(X/X_0)+16/116)^3 X_0 & for\ 0.008856 < X/X_0 \le 1 \\ f(X/X_0) X_0/7.787 & for\ 0 \le X/X_0 \le 0.008856 \end{cases}$$

$$Y = \begin{cases} (f(Y/Y_0)+16/116)^3 Y_0 & for\ 0.008856 < Y/Y_0 \le 1 \\ f(Y/Y_0) Y_0/7.787 & for\ 0 \le Y/Y_0 \le 0.008856 \end{cases} \quad \ldots \cdot (17)$$

$$Z = \begin{cases} (f(Z/Z_0)+16/116)^3 Z_0 & for\ 0.008856 < Z/Z_0 \le 1 \\ f(Z/Z_0) Z_0/7.787 & for\ 0 \le Z/Z_0 \le 0.008856 \end{cases}$$

Since there is almost no possibility that $X/X_0$, $Y/Y_0$ or $Z/Z_0$ is smaller than 0.008856, each equation of equations (17) may be constituted of a single formula rather than two formulae for the respective conditions.

The reference white data on the receiver side is used for $X_0$, $Y_0$ and $Z_0$. The reference white data is sent from a receiver (not shown) or an information management mechanism connected to the network 10 and managing the reference white data. The writing of those values and the operation are performed by a CPU 41. Thus, the color space is changed from CIELAB to CIEXYZ.

A 3×3-matrix operation circuit 3' converts, by a matrix operation, the values H1, H2 and H3 on the third intermediate color space (XYZ) to values G4, G5 and G6 on a fourth intermediate color space. Matrix coefficients suitable for the type of color space of the receiver to represent values F1, F2 and F3 are read out from the coefficients/constants memory 42 and used for the operation circuit 3'. The reading and writing of those coefficients and the operation are performed by the CPU 41.

Then, three one-dimensional LUTs 2' change the values G4, G5 and G6 on the fourth intermediate color space to values G1, G2 and G3 on a fifth intermediate color space, respectively. Values suitable for the type of color space to represent F1, F2 and F3 are read out from the coefficients/constants memory 42 and used as entries of the LUTs 2' The reading and writing of those values and the operation are performed by the CPU 41.

Finally, a 3×3-matrix operation circuit 1' converts, by a matrix operation, the values G1, G2 and G3 to the values F1, F2 and F3 on a certain color space selected from various color spaces. Matrix coefficients of the operation circuits 1' are read from the coefficients/constants memory 42. The reading and writing of the coefficients and the operation are performed by the CPU 41.

The publication Hei. 4-78269 (mentioned above) describes specific coefficients and constants to be stored in the memory 42. Therefore, a description therefor is omitted here.

Although in this embodiment the method including the conversion to CIELAB, which is employed in the second embodiment, is used to calculate the corresponding color, the other methods employed in the first embodiment may be used.

Where the color space to represent the color information transmitted through the network 10 is limited to CIELAB, there can be omitted the 3×3-matrix operation circuit 1', three one-dimensional LUTs 2' and 3×3-matrix operation circuit 3' for the color space conversion and the three one-dimensional LUTs 7' and 3×3-matrix operation circuit 8' for the conversion from CIELAB to XYZ. In this case, the apparatus can be much simplified.

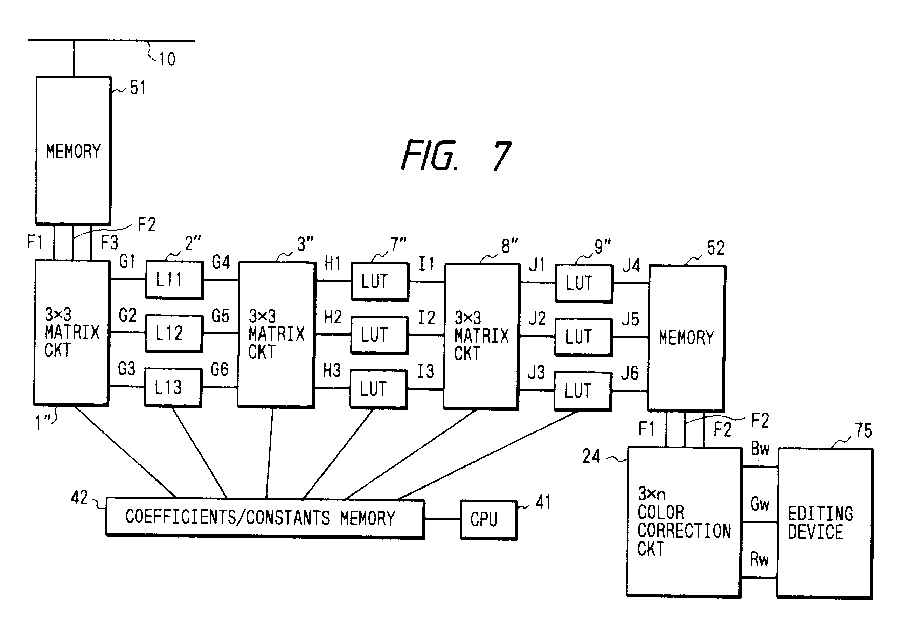

Fig. 7 is a block diagram showing a color editing apparatus having a color conversion device according to a fourth embodiment of the invention. This color editing apparatus has features that it receives color information on a certain color space selected from various color spaces, converts the received color information to information on the own internal color space while calculating the corresponding color and/or performing operations for the gamut conversion, and performing an editing operation, and that, after those operations, when a receiver of color information does not have an operation device for the color space conversion, an operation device for calculating the corresponding color and an operation device for the gamut compression, the color information editing apparatus outputs the color information after performing the operations of the missing devices on the receiver side. The color conversion device of this embodiment is further characterized in that the color conversions in the receiving and sending operations are performed by a single set of circuits.

In the receiving operation, a 3×3-matrix operation circuit 1" converts, by a matrix operation, input values F1, F2 and F3 on a certain color space to values G1, G2 and G3 on a first intermediate color space. Matrix coefficients of the operation circuit 1" are set in accordance with the type of color space (various color spaces may be used) to represent the values F1, F2 and F3 by using coefficients sent, as those defining the equation for correlation with XYZ, from a sender (not shown) or an information management mechanism connected to the network 10, by reading out coefficients stored in a coefficients/constants memory 42, or by using results of an operation on the above two kinds of coefficients. The reading and writing of those coefficients and the operation are performed by a CPU 41.

Three one-dimensional LUTs 2" change the values G1, G2 and G3 on the first intermediate color space to values G4, G5 and G6 on a second intermediate color space, respectively. Entries of the one-dimensional LUTs 2" are set in accordance with the type of color space by using values sent, as those defining the equation for correlation with XYZ, from the sender (not shown) or the information management mechanism connected to the network 10, by reading out values stored in the coefficients/constants memory 42, or by using results of an operation on the above two kinds of values. The reading and writing of those values and the operation are performed by the CPU 41.

A 3×3-matrix operation circuit 3" converts the values G4, G5 and G6 on the second intermediate color space to values H1, H2 and H3 on a third intermediate color space by a matrix operation. Matrix coefficients of the operation circuit 3" are set in accordance with the type of color space by using coefficients sent, as those defining the equation for correlation with XYZ, from the sender (not shown) or an information management mechanism connected to the network 10, by reading out coefficients stored in the coefficients/constants memory 42, or by using results of an operation on the above two kinds of coefficients. The reading and writing of those coefficients and the operation are performed by a CPU 41.

The third intermediate color space to represent H1, H2 and H3 is always XYZ.

Then, three one-dimensional LUTs 7" change the values H1, H2 and H3 on the third intermediate color space (XYZ) to values I1, I2 and I3 on a fourth intermediate color space, respectively. Curves of the three one-dimensional LUTs 7" are set to $f(X/X_0)$, $f(Y/Y_0)$ and $f(Z/Z_0)$ of equation (10), which are read from the coefficients/constants memory 42. The reading and writing of those values are performed by the CPU 41. The own reference white data is employed as the values of $X_0$, $Y_0$ and $Z_0$. In this embodiment, setting is made such that $X_0 = 96.4$, $Y_0 = 100$ and $Z_0 = 82.4$ (standard source $D_{50}$).

Then, a 3×3-matrix operation circuit 8" converts the values I1, I2 and I3 on the fourth intermediate color space to values J1, J2 and J3 on a fifth intermediate color space by a matrix operation. Matrix coefficients of the matrix operation circuit 8" are set to those used in equation (11), which are read from the coefficients/constants memory 42. The reading and writing of those matrix coefficients is performed by the CPU 41. Thus, the color space has been changed from CIEXYZ to CIELAB.

Then, three one-dimensional LUTs 9 change the values J1, J2 and J3 on the fifth intermediate color space (CIELAB) to values J4, J5 and J6. Entries of the three one-dimensional LUTs 9" are set by using values sent, as gamut information, from the sender (not shown) or the information management mechanism connected to the network 10, by reading out values stored in the coefficients/constants memory 42, or by using results of an operation on the above two kinds of values. The reading and writing of those values and the operation are performed by the CPU 41.

Since the color space to represent the values J4, J5 and J6 is always CIELAB, the number of bits can be reduced or there hardly occurs picture quality deterioration due to sub-sampling, thereby improving data compression performance. Therefore, the present embodiment has an advantage that the capacity of the memory 52 can be reduced.

A 3×n color correction circuit 24 performs conversion to values Bw, Gw and Rw on an internal color space of an editing device 75. Matrix coefficients that have been determined recursively so as to enable correct conversion from CIELAB to the internal color space and stored in the coefficients/constants memory 42 are used for the 3×n color correction matrix circuit 24. The reading and writing of those coefficients are performed by the CPU 41. The number n is basically three. Where more accurate color reproduction is required, the circuit 24 may include higher terms, or include three one-dimensional LUTs for changing curves of color signals, or include both of them.

On the other hand, the sending operation is performed as follows.

The coefficients of the 3×n color correction matrix circuit 24 are changed to ones that have been predetermined recursively to enable correct conversion from the color space for Bw, Gw and Rw to CIELAB and stored in the coefficients/constants memory 42. The reading and writing of those coefficients are performed by the CPU 41. The own reference white data is employed as the values of $X_0$, $Y_0$ and $Z_0$. In this embodiment, setting is made such that $X_0 = 96.4$, $Y_0 = 100$ and $Z_0 = 82.4$ (standard source $D_{50}$).

The entries of the three one-dimensional LUTs 9" are set by using values sent, as gamut information, from an information receiver (not shown) or an information management mechanism connected to the network 10 and managing the gamut information, by reading out values stored in the coefficients/constants memory 42, or by using results of an operation on the above two kinds of values. The reading and writing of those values and the operation are performed by the CPU 41.

The matrix coefficients of the 3×3-matrix operation circuit 8" and the curves of the three LUTs 7" are changed to ones used in equations (16) and (17), respectively. The reading and writing of those coefficients and values and the operation are performed by the CPU 41. Thus, the color space has been changed from CIELAB to CIEXYZ.

The matrix coefficients of the 3×3-matrix operation circuit 3", the entries of the three one-dimensional LUTs 2" and the matrix coefficients of the 3×3-matrix operation circuit 1" are changed to ones stored in the coefficients/constants memory 42 that are suitable for the color space to represent F1, F2 and F3. The reading and writing of those coefficients and values and the operation are performed by the CPU 41.

The publication Hei. 4-78269 (mentioned above) and the first embodiment of the invention describe the specific coefficients and constants to be stored in the memory 42. Therefore, a description therefor is omitted here.

Although in this embodiment the method including the conversion to CIELAB, which is employed in the second embodiment, is used to calculate the corresponding color, the other methods employed in the first embodiment may be used.

Where the color space to represent the color information transmitted through the network 10 is limited to CIELAB, there can be omitted the 3×3-matrix operation circuit 1", three one-dimensional LUTs 2" and 3×3-matrix operation circuit 3" for the color space conversion and the three one-dimensional LUTs 7" and 3×3-matrix operation circuit 8" for the conversion between XYZ and CIELAB. In this case, the apparatus can be much simplified.

The color information may be recorded on a recording medium instead of being sent to the network 10. In this case, even with devices not connected to the network 10, the same functions and advantages as with the devices connected to the network 10 (as in the above embodiment) can be obtained through the recording medium in which the environmental information, gamut information, etc. are recorded.

As described above, according to the invention, the color information exchange mechanism which can perform the gamut compression and accommodate the color adaptation can be provided as an extension of the conventional ODA mechanism. Further, since various types of operations for the color adaptation can be realized by a single set of circuits by rewriting their coefficients and constants, accurate color conversion can always be performed by inexpensive constitution.

## Claims

1. A color information processing apparatus for receiving color picture information send from another color information processing apparatus via a network (10), wherein the color picture information is transmitted through the network in a color transmission space, comprising

   means (102) for receiving said color information, and
   means (102-1, 102-3, 102-4) for converting the color picture information from the color transmission space to the CIELAB color space having coordinates L*, a* and b* used in the receiving color information processing apparatus,

   **characterized in that**
   the means for converting the color picture information further comprises a gamut compression/expansion means (102-4-1, 102-4-2, 102-4-3, 9) using gamut information of the receiving color information processing apparatus (102) and of the sending color information processing apparatus, and wherein the gamut compression/expansion is performed during the conversion of the transmitted color signals into CIELAB space, the gamut information of the sending color information processing apparatus being transmitted via the network (10) together with said color picture information, the transmitted gamut information comprising the maximum and minimum of L*, and an average of maximums of $C^* = (a^{*2} + b^{*2})^{1/2}$ for respective values of the hue $H^* = \tan^{-1}(a^*/b^*)$ of said sending color information apparatus.

2. The information processing apparatus according to claim 1 wherein the conversion means (102-4) which performs the gamut compression/expansion using the gamut information consists of a first gamma conversion means (102-4-1), followed by a matrix operation means (102-4-2), and a second gamma conversion means (102-4-3), wherein constants necessary for at least one of the first and second gamma conversion means (102-4-1, 102-4-3) are supplied by a first coefficients/constants rewriting means (102-4-4).

3. The information processing apparatus according to any one of the claims 1 or 2, wherein the gamut compression is done linearly.

4. The information procession apparatus according to any one of the claims 1 or 2, wherein the gamut compression is done nonlinearly.

5. An information procession apparatus according to any one of the preceding claims, wherein the conversion means for converting the color information from the color transmission space to the CIELAB space further comprises a conversion means (102-3) for performing conversion to a corresponding color in CIEXYZ space before the conversion to the CIELAB space using environmental information of the sending color information processing apparatus and receiving color information processing apparatus, wherein the environmental information comprises reference data of the sending color information processing apparatus and/or receiving color information processing apparatus and/or an illuminance and a luminous reflectance of the sending color information processing apparatus and/or receiving color information processing apparatus.

6. An information processing apparatus according to claim 5, wherein the conversion means (102-3) for performing the conversion to a corresponding color in CIEXYZ space using the environmental information consists of a first matrix operation means (102-3-1), followed by a gamma conversion means (102-3-2), and a second matrix operation means (102-3-3), wherein coefficients necessary for at least one of the first and second matrix means (102-3-1, 102-3-3) are supplied by a second coefficients/constants rewriting means (102-3-4).

7. An information processing apparatus according to claim 5 or 6, wherein the conversion means further comprises a conversion means (102-1) for converting color values given in the transmission color space to CIEXYZ space before the conversion to a corresponding color using an equation defining the correlation of the transmission space with CIEXYZ space, the equation being transmitted with the color space values through the network.

8. An information processing apparatus according to any one of the preceding claims further comprising a fourth conversion means (102-5) for performing conversion to an internal color space of the equipment after the conversion to CIELAB space.

9. An information processing means according to claim 8, wherein the internal color space can be one of a printer color space, and a CRT color space.

**Patentansprüche**

1. Farbinformations-Verarbeitungs-Vorrichtung zum Empfangen einer Farbbild-Information, die von einer anderen Farbinformations-Verarbeitungs-Vorrichtung über ein Netzwerk (10) gesendet wird, wobei die Farbbild-Information durch das Netzwerk in einem Farbübertragungsraum übertragen wird, umfassend:

    Mittel (102) zum Empfangen der Farbinformation, und

    Mittel (102-1, 102-3, 102-4) zum Konvertieren der Farbbild-Information aus dem Farbübertragungsraum zu dem CIELAB Farbraum, der die Koordinaten L* ,a* und b* aufweist, die in der Farbinformations-Verarbeitungs-Empfangsvorrichtung verwendet werden,

    **dadurch gekennzeichnet, daß**
    das Mittel zum Konvertieren der Farbbild-Information weiterhin ein Farbpaletten-Kompressions/Expansionsmittel (102-4-1, 102-4-2, 102-4-3, 9) umfaßt, das eine Farbpaletten-Information der Farbinformations-Verarbeitungs-Empfangsvorrichtung (102) und der Farbinformations-Verarbeitungs-Sendevorrichtung verwendet und wobei die Farbpaletten-Kompression/Expansion während der Konvertierung der übertragenen Farbsignale in den CIELAB-Raum durchgeführt wird, die Farbpaletten-Information der Farbinformations-Verarbeitungs-Sendevorrichtung über das Netzwerk (10) zusammen mit der Farbbild-Information übertragen wird, wobei die übertragene Farbpalettten-Information das Maximum und das Minimum von L* und einen Mittelwert des Maximums $C^* = (a^{*2} + b^{*2})^{1/2}$ für entsprechende Werte des Farbtons $H^* = \tan^{-1} (a^*/b^*)$ der Farbionformations-Sendevorrichtung aufweist.

2. Informations-Verarbeitungs-Vorrichtung nach Anspruch 1, wobei das Konvertierungsmittel (102-4), das die Farbpaletten-Kompression/Expansion durchführt, die die Farbpaletten-Information verwendet, aus einem ersten Gamma-Konversionsmittel (102-4-1), gefolgt durch ein Matrix-Bearbeitungsmittel (102-4-2) und einem zweiten Gamma-Konversionsmittel (102-4-3) besteht, wobei Konstanten, die notwendig für mindestens eine der ersten oder zweiten Gamma-Konversionsmittel (102-4-1, 102-4-3) sind, durch ein erstes ein Koeffizienten/Konstanten-Überschreibungsmittel (102-4-4) bereitgestellt werden.

3. Informations-Verarbeitungs-Vorrichtung nach irgendeinem der Ansprüche 1 oder 2, wobei die Farbpaletten-Kompression linear durchgeführt wird.

4. Informations-Verarbeitungs-Vorrichtung nach irgendeinem der Ansprüche 1 oder 2, wobei die Farbpaletten-Kompression nicht linear durchgeführt wird.

5. Informations-Verarbeitungs-Vorrichtung nach irgendeinem der vorhergehenden Ansprüche, wobei das Konversionsmittel zum Konvertieren der Farbinformation von dem Farbübertragungsraum zu dem CIELAB-Raum weiterhin umfaßt: ein Konversionsmittel (102-3) zum Durchführen der Konversion in eine entsprechende Farbe in einem CIEXYZ-Raum vor der Konversion in den CIELAB-Raum unter Verwenden der umgebenden Information der Farbinformations-Verarbeitungs-Sendevorrichtung und der Farbinformations-Verarbeitungs-Empfangsvorrichtung, wobei die umgebende Information Referenzdaten der Farbinformations-Verarbeitungs-Sendevorrichtung und/oder der Farbinformations-Verarbeitungs-Empfangsvorrichtung und/oder einer Beleuchtungsstärke und eines leuchtenden Reflexionsvermögens der Farbinformations-Verarbeitungs-Sendevorrichtung und/oder der Farbinformations-Verarbeitungs-Empfangsvorrichtung umfaßt.

6. Informations-Verarbeitungs-Vorrichtung nach Anspruch 5, wobei die Konversionsmittel (102-3) zum Durchführen der Konversion zu einer entsprechenden Farbe in dem CIEXYZ-Raum unter Verwendung der umgebenden Information aus einem ersten Matrix-Bearbeitungsmittel (102-3-1), gefolgt durch ein Gamma-Konversionsmittel (102-3-2) und einem zweiten Matrix-Bearbeitungsmittel (102-3-3) besteht, wobei Koeffizienten, die zumindest für eines der ersten oder zweiten Matrix-Mittel (102-3-1, 102-3-3) notwendig sind, durch ein zweites Koeffizienten/Konstanten-Überschreibungsmittel (102-3-4) bereitgestellt werden.

7. Informations-Verarbeitungs-Vorrichtung nach Anspruch 5 oder 6, wobei das Konversionsmittel weiterhin umfaßt: ein Konversionsmittel (102-1) zum Konvertieren der Farbwerte, die in dem Farbübertragungsraum gegeben sind, zu dem CIEXYZ-Raum vor der Konversion zu einer entsprechenden Farbe unter Verwendung einer Gleichung, die die Korrelation des Übertragungsraumes mit dem CIEXYZ-Raum definiert, dessen Gleichung mit den Farbraumwerten durch das Netzwerk übertragen wird.

8. Informations-Verarbeitungs-Vorrichtung nach irgendeinem der vorhergehenden Ansprüche, die weiterhin ein viertes Konversionsmittel (102-5) zum Durchführen der Konversion zu einem internen Farbraum der Anlage nach der Konversion zu dem CIELAB-Raum umfaßt.

9. Informations-Verarbeitungs-Vorrichtung nach Anspruch 8, wobei der interne Farbraum der eines Farbdruckerraumes und eines CRT-Farbraumes sein kann.

## Revendications

1. Appareil de traitement d'informations de couleur, destiné à recevoir des informations d'images en couleur envoyées par un autre appareil de traitement d'informations de couleur via un réseau (10), les informations d'images en couleur étant transmises par l'intermédiaire du réseau dans un espace de transmission de couleur, comprenant

un moyen (102) destiné à recevoir lesdites informations de couleur, et
un moyen (102-1, 102-3, 102-4) destiné à convertir les informations d'image en couleur, de l'espace de transmission de couleur en l'espace de couleur CIELAB ayant des coordonnées L*, a* et b* utilisées dans l'appareil de traitement d'informations de couleur de réception,

caractérisé en ce que:
le moyen de conversion d'informations d'images en couleur comprend, en outre, un moyen (102-4-1, 102-4-2, 102-4-3, 9) de compression/expansion de gamme de couleurs utilisant des informations de gamme de couleur de l'appareil (102) de traitement d'informations de couleur de réception et de l'appareil de traitement d'informations de couleur d'émission, et dans lequel la compression/expansion de gamme de couleurs est effectuée pendant la conversion, en un espace CIELAB, des signaux de couleur transmis, les information de gamme de couleurs de l'appareil de traitement d'informations de couleur d'émission étant transmises, via le réseau (10), conjointement avec lesdites informations d'images en couleur, les informations de gamme de couleurs transmises comprenant le maximum et le minimum de L*, et une moyenne des maxima de $C^* = (a^{*2} + b^{*2})^{1/2}$ pour les valeurs respectives de la teinte $H^* = \tan^{-1}(a^*/b^*)$ de l'appareil de traitement d'informations de couleur d'émission.

2. Appareil de traitement d'informations selon la revendication 1, dans lequel le moyen de conversion (102-4), qui effectue la compression/expansion de gamme de couleurs en utilisant les informations de gamme de couleurs, est constitué d'un premier moyen (102-4-1) de conversion de gamma, suivi d'un moyen (102-4-2) d'exécution d'opération matricielle, et d'un deuxième moyen (102-4-3) de conversion de gamma, les constantes nécessaires pour au moins un des premier et deuxième moyens (102-4-1, 102-4-3) de conversion de gamma étant fournies par un premier moyen (102-4-4) de ré-inscription de coefficients/constantes.

3. Appareil de traitement d'information selon la revendication 1 ou 2, dans lequel la compression de gamme des couleur est effectuée linéairement.

4. Appareil de traitement d'informations selon la revendication 1 ou 2, dans lequel la compression de gamme de couleurs est effectuée de façon non linéaire.

5. Appareil de traitement d'informations selon l'une quelconque des revendications précédentes, dans lequel le moyen de conversion destiné à convertir les informations de couleur, de l'espace de transmission de couleur en l'espace CIELAB, comprend, en outre, un moyen de conversion (102-3) destiné à effectuer la conversion en une couleur correspondante dans un espace CIEXYZ avant la conversion en l'espace CIELAB en utilisant des informations d'environnement de l'appareil de traitement d'informations de couleur d'émission et de l'appareil de traitement d'informations de couleur de réception, les informations d'environnement comprenant des données de référence de l'appareil de traitement d'informations de couleur d'émission et/ou de l'appareil de traitement d'informations de couleur de réception et/ou un éclairement et une réflectance lumineuse de l'appareil de traitement d'informations de couleur d'émission et/ou de l'appareil de traitement d'informations de couleur de réception.

6. Appareil de traitement d'informations selon la revendication 5, dans lequel le moyen de conversion (102-3) destiné à effectuer la conversion en une couleur correspondante dans un espace CIEXYZ en utilisant les informations d'environnement est constitué d'un premier moyen (102-3-1) d'exécution d'opération matricielle, suivi d'un moyen (102-3-2) de conversion de gamma, et d'un deuxième moyen (102-3-3) d'exécution d'opération matricielle, les coefficients nécessaires pour au moins un des premier et deuxième moyens (102-3-1 , 102-3-3) d'exécution d'opération matricielle étant fournis par un deuxième moyen (102-3-4) de ré-écriture de coefficients/constantes.

7. Appareil de traitement d'informations selon la revendication 5 ou 6, dans lequel le moyen de conversion comprend, en outre, un moyen de conversion (102-1) destiné à convertir des valeurs de couleur données dans l'espace de couleur de transmission en un espace CIEXYZ, avant la conversion en une couleur correspondante en utilisant une équation définissant la corrélation de l'espace de transmission avec un espace CIEXYZ, l'équation étant transmise avec les valeurs d'espace de couleur par l'intermédiaire du réseau.

8. Appareil de traitement d'informations selon l'une quelconque des revendications précédentes comprenant, en outre, un quatrième moyen de conversion (102-5) destiné à effectuer une conversion en un espace de couleur interne de l'équipement après la conversion en un espace CIELAB.

9. Moyen de traitement d'informations selon la revendication 8, dans lequel l'espace de couleur interne peut être l'espace de couleur d'une imprimante et l'espace de couleur d'un CRT.

FIG. 1

SENDER/RECEIVER

102    102-5    102-4    102-3    102-1

INTERNAL COLOR SPACE ↔ 4TH CONVERSION MEANS ↔ L*a*b* ↔ 3RD CONVERSION MEANS ↔ X'Y'Z' ↔ 2ND CONVERSION MEANS ↔ XYZ ↔ 1ST CONVERSION MEANS ↔ NETWORK

10

GAMUT INFORMATION

ENVIRONMENTAL INFORMATION

EQUATION FOR CORRELATION WITH XYZ

EP 0 579 224 B1

## FIG. 2

```
102-3-1              102-3-2              102-3-3

1ST                  GAMMA                2ND
MATRIX               CONVERSION           MATRIX
OPERATION            MEANS                OPERATION
MEANS                                     MEANS

              COEFFICIENTS/         ~ 102-3-4
              CONSTANTS
              REWRITING
              MEANS
```

## FIG. 3

```
102-4-1              102-4-2              102-4-3

1ST                  MATRIX               2ND
GAMMA                OPERATION            GAMMA
CONVERSION           MEANS                CONVERSION
MEANS                                     MEANS

              CONSTANTS          ~ 102-4-4
              REWRITING
              MEANS
```

FIG. 4

FIG. 5

## FIG. 6

FIG. 7

EP 0 579 224 B1

# FIG. 8

# FIG. 9

# FIG. 10

GAMUT OF CRT

GAMUT OF PRINTER

$C^*(=\sqrt{a^{*2}+b^{*2}})$

GAMUT OF CRT

GAMUT OF PRINTER

CHROMA RATIO : $k = \overline{C_2/C_1}$